# EUROPEAN PATENT APPLICATION

(11) **EP 1 914 782 A2**
(43) Date of publication of application: **23.04.2008**
(21) Application number: 07254081.8
(22) Date of filing: 16.10.2007
(51) Int. Cl.: H01J 17/04, H01J 17/49, C03C 17/34

(54) **Plasma display panel**

(30) Priority: 16.10.2006 KR 20060100483
(71) Applicant: Samsung SDI Co., Ltd., Suwon-si, Gyeonggi-do (KR)
(72) Inventor: Ki-Dong, Kim Legal & IP Teams Samsung SDI., Ltd., Gyeonggi-do (KR)
(74) Representative: Mounteney, Simon James

(57) **Abstract**

Disclosed is a plasma display panel (PDP) that includes a protective layer formed to cover a dielectric layer of the PDP. The protective layer includes magnesium oxide (MgO) material and dopant elements. Sintered magnesium oxide, which has higher response speed than monocrystalline magnesium oxide, is used as the magnesium oxide material. The dopant includes a first dopant and a second dopant. The first dopant includes calcium (Ca), aluminum (Al), and silicon (Si), and the second dopant includes iron (Fe), zirconium (Zr), or a combination thereof. By the use of the dopant-doped sintered magnesium oxide for the protective layer, temperature-dependency of the protective layer is reduced, and high response speed is obtained. The improved characteristics of the protective layer improve the discharge stability of the plasma display panel.

## Description

### BACKGROUND OF THE INVENTION

### Field of the Invention

The present invention relates to a plasma display panel (PDP). More particularly, the present invention relates to a plasma display panel including a protective layer that includes a dopant element. By the use of a dopant-doped sintered material for the protective layer, temperature-dependency of the protective layer is reduced and high response speed is obtained. The improved characteristics of the protective layer improve the discharge stability of the PDP.

### Description of the Related Art

A plasma display panel (PDP) is a display device that displays images by exciting a phosphor with vacuum ultraviolet (VUV) rays generated by gas discharge in discharge cells. As the PDP enables making a wide screen with a high resolution, PDP has been spotlighted as a next generation flat panel display.

A plasma display panel generally has a 3-electrode surface-discharge type structure. In the 3-electrode surface-discharge type structure, the plasma display panel includes a front substrate and a rear substrate disposed substantially in parallel with each other. On the front substrate, display electrodes, each of which includes two electrodes, are arranged. A dielectric layer is arranged on the front substrate to cover the display electrodes. Address electrodes are arranged on the rear substrate. A space between the front substrate and the rear substrate is partitioned by barrier ribs to form a plurality of discharge cells that are filled with discharge gases. In addition, a phosphor layer is disposed on the rear substrate.

The electrodes, the barrier ribs, and the dielectric layers are generally formed through a printing process for economic reasons. The dielectric layer, however, becomes thick when formed through the printing process, and thus the layer has poor quality compared to a layer formed through a thin-film forming process.

During the operation of the plasma display panel, the dielectric layer and the electrode formed under the dielectric layer are damaged by ion sputtering and also by electrons generated from the discharge. Therefore, there is a problem that the lifespan of the alternating current PDP is shortened.

In an attempt to reduce the damage from the ion bombardment during the discharge, a protective layer is disposed on the dielectric layer in a thickness as thin as hundreds of nanometers (nm). In general, the protective layer of the PDP is formed of magnesium oxide (MgO). The MgO protective layer can expand the lifespan of the alternating current (AC) type PDP by reducing a discharge voltage and by protecting the dielectric layer from being damaged by the ion sputtering.

The protective layer, however, makes it difficult to obtain uniform display quality, because the characteristics of the protective layer changes according to film formation conditions. The protective layer may cause black noise that is caused by a delay of address discharge, that is, by a missing address discharge, which is a phenomenon that occurs when a selected cell that is supposed to emit light does not emit light. Black noise occurs in a certain region. Specifically, it preferably occurs in an interface between a light-emitting region and a non-light-emitting region. The black noise occurs when there is no address discharge or when a scan discharge is generated at low strength.

In addition, the MgO protective layer directly contacts discharge gases, and therefore characteristics of components constituting a protective layer and characteristics of film formation of the protective layer may largely affect discharge characteristics of the PDP. The characteristics of MgO protective layer depend on constituent components and film formation conditions such as deposition. Therefore, research on optimal constituent components is required to improve the display quality of a PDP.

The protective layer material is composed of monocrystalline MgO or MgO prepared through a sintering method. The sintered material has a merit of high response speed compared to a monocrystalline material. But it has a temperature-dependency problem, in which its response time varies based on ambient temperature, and therefore discharge reliability and driving stability can be significantly deteriorated. For this reason, conventional sintered material is not suitable for a mass production material.

On the contrary, a monocrystalline material has low temperature dependency. However, it has a low response speed, and therefore causes the PDP to be driven by single scanning, and thereby the monocrystalline material cannot be implemented in a high-definition PDP.

### SUMMARY OF THE INVENTION

One objective of the present invention is to provide a plasma display panel that improves discharge stability and resultantly display quality due to a reduced temperature dependence of discharge characteristics and an increased response speed, which are achieved by adding dopants elements in magnesium oxide (MgO) thin film protevice layer of the plasma display panel.

Another objective of the present invention is to provide a plasma display panel that prevents black noise and improves the display quality by specifically determining dopant elements and amounts of the dopant elements doped in the MgO thin film protective layer.

According to a first aspect of the present invention, there is provided a plasma display panel (PDP), which includes a first substrate, an address electrode formed on an inner surface of the first substrate, a second substrate spaced apart from the first substrate and facing the first substrate, a display electrode formed on an inner surface of the second substrate, a dielectric layer formed on the inner surface of the second substrate and covering the display electrode, and a protective layer formed on the dielectric layer.

The protective layer includes magnesium oxide (MgO) and dopant elements. The dopant elements include a first dopant element and a second dopant element. The first dopant element includes calcium (Ca), aluminum (Al), and silicon (Si), and the second dopant element is selected from the group consisting of iron (Fe), zirconium (Zr), and combinations thereof. The content of Ca in the first dopant element is 100 ppm by mass to 300 ppm by mass based on the mass of MgO.

According to another aspect of the present invention, there is provided a plasma display panel (PDP), as set out in Claim 1. Preferred features of this aspect are set out in claims 2 to 12.

The optimum range of content of aluminum (Al) can vary depending on the kind of the second dopant element. When zirconium (Zr) is included in the second dopant element, the content of Al is about 150 ppm by mass to 250ppm, and preferably 150 ppm by mass to 170 ppm by mass, based on the mass of MgO.

According to another aspect of the present invention, there is provided a plasma display panel (PDP), comprising: a dielectric layer; and a protective layer formed on the dielectric layer; the protective layer including magnesium oxide (MgO), about 100 ppm by mass to about 300 ppm by mass of calcium (Ca), about 150 ppm by mass to about 250 ppm by mass of aluminum (Al), about 40 ppm by mass to about 150 ppm by mass of silicon (Si), and about 10 ppm by mass to about 40 ppm by mass of iron (Fe), based on the mass of the magnesium oxide.

According to yet another aspect of the present invention, there is provided a plasma display panel (PDP) comprising: a dielectric layer formed on the inner surface of the second substrate and covering the display electrode; and a protective layer formed on the dielectric layer; the protective layer including magnesium oxide (MgO), calcium (Ca), aluminum (Al), silicon (Si), and zirconium (Zr). Preferred features of this aspect are set out in Claims 14 to 21.

### BRIEF DESCRIPTION OF THE DRAWINGS

A more complete appreciation of the invention and many of the attendant advantages thereof, will be readily apparent as the same becomes better understood by reference to the following detailed description when considered in conjunction with the accompanying drawings in which like reference symbols indicate the same or similar components, wherein:
FIG. 1 is a perspective view showing a plasma display panel constructed as an embodiment of the present invention;
FIG. 2 is a graph showing a discharge delay time as a function of calcium (Ca) doping content;
FIG. 3 is a graph showing a discharge delay time as a function of iron (Fe) doping content;
FIG. 4 is a graph showing a discharge delay time as a function of aluminum (Al) doping content;
FIG. 5 is a graph showing a discharge delay time as a function of silicon (Si) doping content;
FIG. 6 is a graph showing discharge delay time shown in FIGS 2 to 5; and
FIG. 7 is a graph showing discharge delay times of plasma display panels constructed in accordance with second Examples 1 to 4 and Second Comparative Examples 1 and 2 of the present invention.

### DETAILED DESCRIPTION OF THE INVENTION

Embodiments of the present invention will hereinafter be described in detail with reference to the accompanying drawings.

The plasma display panel of one embodiment of the present invention includes a magnesium oxide (MgO) protective layer that can improve display quality of a PDP. For the PDP protective layer material in the present invention, sintered MgO materials are used, because it is possible to quantitatively dope these materials with a predetermined dopant component to improve discharge characteristics, and to completely control the quantity of the dopant component within a solid-solution limitation thereof.

Since monocrystalline MgO materials have a different solid-solution limit caused by a different cooling speed after fusion, a specific dopant such as silicon (Si) is difficult to quantitatively control the amount when the dopant is doped in monocrystalline MgO materials. Therefore, in some embodiments of the present invention, specific dopants are quantitatively added during a preparation process of a sintered MgO material or a source material of MgO, and then a MgO thin layer is formed using heat deposition. As a result, an address discharge delay time can be minimized during the discharge of PDP, and overall display quality can be improved.

According to one embodiment of the present invention, a specific dopant element is quantitatively doped to a sintered MgO material to reduce temperature-dependency of the sintered MgO material and to maintain the advantage of the sintered MgO material over a monocrystalline MgO material, which will significant improve the discharge stability and reliability.

The dopant element includes a first dopant element such as calcium (Ca), aluminum (Al), or silicon (Si), and a second dopant element such as iron (Fe), zirconium (Zr), or a combination thereof. Discharge stability of a plasma display panel can be improved by interactions of the dopant elements. The protective layer of one embodiment of the present invention includes MgO, and a first dopant element group including Ca, Al, and Si, and a second dopant element selected from a group consisting of Fe, Zr, and combinations thereof.

In the following descriptions, a unit of ppm (parts per million) by mass is used for the contents of the dopant elements. Therefore, ppm in this specification indicates ppm by mass based on a mass of a reference material. In the protective layer of one embodiment of the present invention, calcium (Ca) is included in an amount of about 100 ppm to 300 ppm, and preferably 160 ppm to 180 ppm, based on MgO content. When the Ca content is within the above range, the shortest discharge delay time is obtained. When the Ca content is less than 100 ppm or more than 300 ppm, the discharge delay time can be increased.

Silicon (Si) is included in an amount of about 40 ppm to 150 ppm, and preferably 100 ppm to 120 ppm, based on MgO content. When the Si content is within the above range, the discharge delay time is the shortest. When the Si content is less than 40 ppm or more than 150 ppm, the discharge delay time can be increased.

Aluminum (Al) content is controlled depending on the kind of the second dopant element. When iron (Fe) is included for the second dopant element, Al is included in an amount of about 150 ppm to 250 ppm, and preferably 190 ppm to 210 ppm, based on MgO content. When zirconium (Zr) is included in the second dopant element, Al is included in an amount of about 150 ppm to 250 ppm, and preferably 150 ppm to 170 ppm, based on MgO content. The optimized Al content can minimize the discharge delay time. Therefore, when the Al content is out of the optimized range, the discharge delay time can be significantly increased.

For iron as the second dopant element, the iron (Fe) is included in an amount of about 10 ppm to 40 ppm, and preferably 20 ppm to 30 ppm, based on MgO content. The optimized Fe content can minimize the discharge delay time. Therefore, when the Fe content is out of the optimized range, the discharge delay time can be significantly increased.

For zirconium as the second dopant element, the zirconium (Zr) content is about 40 ppm to 100 ppm, and preferably 50 ppm to 80 ppm, based on MgO content. The discharge delay time can be minimized by controlling the Zr content. Therefore, when the Zr content is out of the optimum range, the discharge delay time can be significantly increased.

In embodiments of the present invention, polycrystalline MgO material, which is produced by a sintering method, is preferred to a monocrystalline MgO material, because polycrystalline MgO material can maintain uniform contents of dopant elements.

Components for the protective layer can be produced by general MgO pellet procedures, in which a precursor of MgO and a precursor of dopants, which includes a first dopant element and a second dopant element, are mixed, and the resulting mixture is calcinated followed by wet-milling, drying, pressing, and sintering. The precursor of MgO can be pure Mg(OH)₂, and the precursor of dopants, which includes the first dopant element and the second dopant element, can be any material that contains the first dopant element and the second dopant element. The precursor of MgO and the precursor of dopants can be either liquid-types or solid-types, or one of the precursor of MgO and the precursor of dopants can be liquid type and the other solid type. The details of the procedures are well known in the related art, and thus will not be illustrated in more detail in this application.

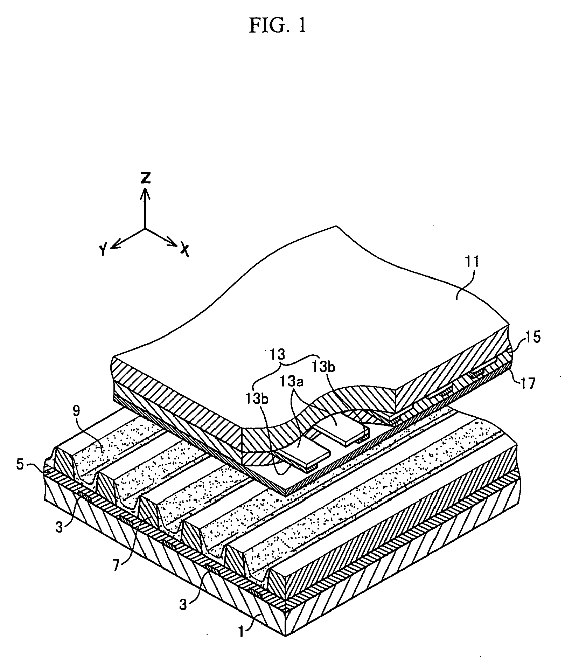

Hereinafter, one preferable embodiment of a plasma display panel including the protective layer will be described in a more detail with reference to the attached drawings. The present invention, however, is not limited to the plasma display panel as shown in FIG. 1, but can be applied various types of plasma display panels.

FIG. 1 is a partial exploded perspective view showing a plasma display panel constructed as one embodiment of the present invention. As shown in FIG. 1, a plasma display panel of one embodiment of the present invention includes first substrate 1 (also referred to as a rear substrate) and second substrate 11 (also referred to as a front substrate) that are disposed substantially parallel to first substrate 1 with a predetermined distance therebetween.

A plurality of address electrodes 3 is disposed in one direction (Y direction in the drawing) on an inner surface of first substrate 1, and first dielectric layer 5 is formed on the inner surface of first substrate 1 covering address electrodes 3. A plurality of barrier ribs 7 with a predetermined height are disposed on first dielectric layer 5 at corresponding positions between two of address electrodes 3. Discharge spaces are determined by the barrier ribs 7. Barrier ribs 7 can have any shape to partition the discharge spaces. For example, barrier ribs 7 can be formed either in a closed pattern such as a waffle-shaped, a matrix-shaped, or a delta-shaped pattern, or in an open pattern such as a stripe pattern. The closed pattern can be formed in a manner that the discharge space has a cross-sectional shape of a circle, an oval, a polygon such as a quadrangle, a triangle, a pentagon, and so on. Red, green, and blue phosphor layers 9 are disposed in a plurality of discharge cells arranged between barrier ribs 7.

Second substrate 11 facing first substrate 1 includes display electrodes 13, second dielectric layer 15 that is formed on an inner surface of second substrate 11 and covers display electrodes 13, and protection layer 17 covering second dielectric layer 15. The inner surfaces of first substrate 1 and second substrate 11 are defined as the surfaces of the substrates facing each other. Each of display electrodes 13 includes a pair of electrodes, each of which includes transparent electrode 13a and a bus electrode 13b extended in a direction (X direction in the drawing) crossing address electrodes 3. Protective layer 17 includes magnesium oxide (MgO) and dopant elements. The dopant elements include a first dopant element including calcium (Ca), aluminum (Al), or silicon (Si), and a second dopant element including iron (Fe), zirconium (Zr), or combinations thereof.

In the PDP having the above structure, wall charges are formed on the dielectric layer causing address discharge when address driving voltage is applied between the address electrode and one of the electrodes of display electrode 13. Also, sustain discharge is generated in the discharge cells selected during the address discharge when alternating current signals are applied between a pair of electrodes, each of which includes a pair of pairs of transparent electrode 13a and a bus electrode 13b, formed on the inner surface of second substrate 11. Accordingly, ultraviolet rays are generated as the discharge gas filled in the discharge space is excited and relaxed. The ultraviolet rays excite phosphors to thereby generate visible light and form an image.

The method of fabricating a plasma display panel is known in the art, so that a detailed description of fabricating a plasma display panel is omitted. Hereinafter, the protective layer that is the main feature in the present invention will be described in detail.

The protective layer covers the dielectric layer in the plasma display panel to protect the dielectric layer from ion bombardment of the discharge gas during discharge process. The protective layer includes magnesium oxide (MgO) as a base material, which has sputtering resistance and a high secondary electron emission coefficient. Generally monocrystalline MgO materials or sintered MgO materials can be used for MgO materials as mentioned above. Monocrystalline MgO materials, however, have a different solid-solution limit caused by a different cooling speed after fusion, and therefore a specific type of dopant is difficult to be quantitatively controlled. Therefore, in one embodiment of the present invention, a first dopant element including Ca, Al, and Si and a second dopant element including Fe, Zr, or a combination thereof are quantitatively added during a preparation process of a sintered MgO material or a source material of MgO, and the protective layer is deposited using a plasma deposition method.

The protective layer can be formed by a thick layer printing method using paste. The plasma deposition method, however, is preferred because it is relatively strong against ion sputtering impact, and it can reduce the discharge initiating voltage and the sustain discharge voltage by the emission of secondary electrons. The plasma deposition method includes electron beam deposition, ion plating, magnetron sputtering, and so on.

As described above, the contents of the dopant elements are as follows. calcium (Ca) is included in an amount of about 100 ppm to 300 ppm, and preferably 160 ppm to 180 ppm, based on the content of MgO that is a main component of the protective layer. Silicon (Si) is included in an amount of about 40 ppm to 150 ppm, and preferably 100 ppm to 120 ppm, based on the content of MgO. When iron (Fe) is included for the second dopant element, aluminum (Al) is included in an amount of about 150 ppm to 250 ppm, and preferably 190 ppm to 210 ppm, based on MgO content. When zirconium (Zr) is included for the second dopant element, Al is included in an amount of about 150 ppm to 250 ppm, and preferably 150 ppm to 170 ppm, based on MgO content. For the second dopant element, Fe is included in an amount of about 10 ppm to 40 ppm, and preferably 20 ppm to 30ppm, based on MgO content. For the second dopant element, Zr content is 40 ppm to 100 ppm, and preferably 50 ppm to 80 ppm, based on MgO content.

Deposition materials for the MgO protective layer are provided by shaping them into a pellet and sintering the same. It is preferred that the size and shape of the pellet are optimized, because the decomposition speed of the pellet is different depending upon the size and shape of the pellet, and the difference in the decomposition speed causes an unstable procedure such as a different speed of depositing the protective layer.

The MgO protective layer directly contacts discharge gases, and therefore characteristics of components constituting a protective layer and characteristics of film formation of the protective layer may significantly affect discharge characteristics of a PDP. The characteristics of MgO protective layer depend on constituent components and film formation conditions such as deposition. Therefore, the optimal components should be used in order to obtain a desirable improvement of film characteristics.

Hereinafter, examples of the present invention and comparative examples thereof will be described. However, it is understood that the present invention is not limited by these examples.

### Experimental Examples 1 to 14

Discharge sustain electrodes were formed of an indium tin oxide conductive material on an inner surface of a front substrate made of soda lime glass in stripes by using a method known in the art. The entire inner surface of the front substrate having the discharge sustain electrodes was coated with a lead-based glass paste and then baked to thereby form a dielectric layer.

Subsequently, a protective layer including MgO powder and calcium (Ca) was prepared by using an ion plating method, and disposed on the dielectric layer of the first substrate to thereby complete a front substrate for a plasma display panel. Using the front substrate, a plasma display panel was fabricated in accordance with a method known in the art.

The MgO powder had high purity, but may include some impurities. The amount of impurities included in the MgO powder were measured by ICP-AES analysis. The types of impurities and the amount of impurities included in MgO powder are shown in the following Table 1.

Contents of Ca used in Experimental Examples 1 to 14 are listed in Table 2. The contents of Ca and other dopant materials listed in Table 2 to Table 5 are in a unit of ppm by mass based on the mass of MgO.

**Table 1**

| | | | | | | | | |
|---|---|---|---|---|---|---|---|---|
| Component | Al | Ca | Cr | Fe | Si | Mn | Ni | Zn |
| Content (ppm) | 20 | 10 | <2 | 16 | 20 | <15 | <2 | <15 |

### Experimental Examples 15 to 27

The same process as described referring to Experimental Examples 1 to 14 was performed with Fe replacing Ca in Experimental Examples 1 to 14. Contents of Fe used in Experimental Examples 15 to 27 are listed in Table 2.

### Experimental Examples 28 to 47

The same process as described referring to Experimental Examples 1 to 14 was performed with Al replacing Ca in Experimental Examples 1 to 14. Contents of Al used in Experimental Examples 28 to 47 are listed in Table 3.

### Experimental Examples 48 to 60

The same process as described referring to Experimental Examples 1 to 14 was performed with Si replacing Ca in Experimental Examples 1 to 14. Contents of Si used in Experimental Examples 48 to 60 are listed in Table 3.

### Comparative Example 1

The same process as described referring to Experimental Examples 1 to 14 was performed with the condition that Ca content was 15 ppm, Al content was 10 ppm, Fe content was 10 ppm, and Si content was 40 ppm with respect to the content of MgO.

### Comparative Example 2

The same process as described referring to Experimental Examples 1 to 14 was performed with the condition that Ca content was 800 ppm, Al content was 130 ppm, Fe content was 30 ppm, and Si content was 220 ppm, with respect to the content of MgO.

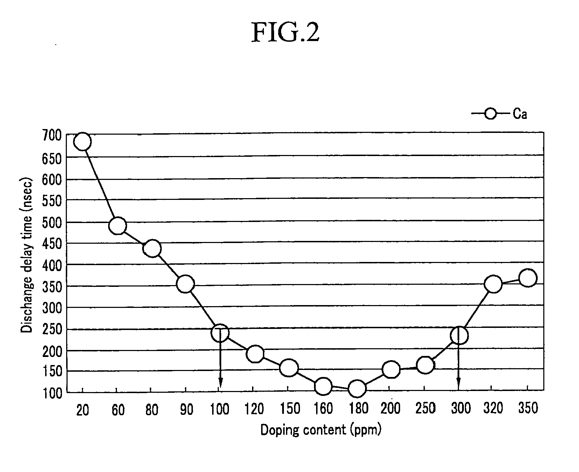

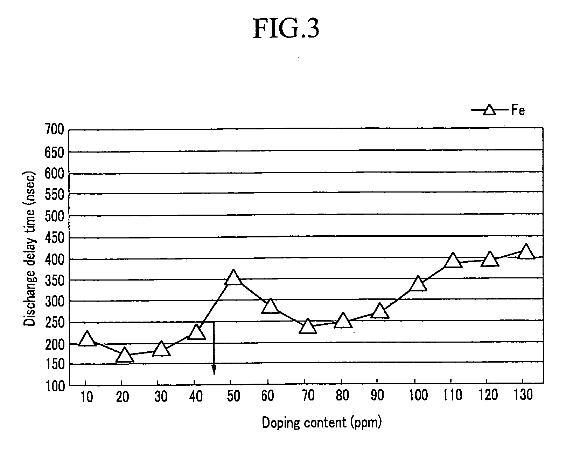

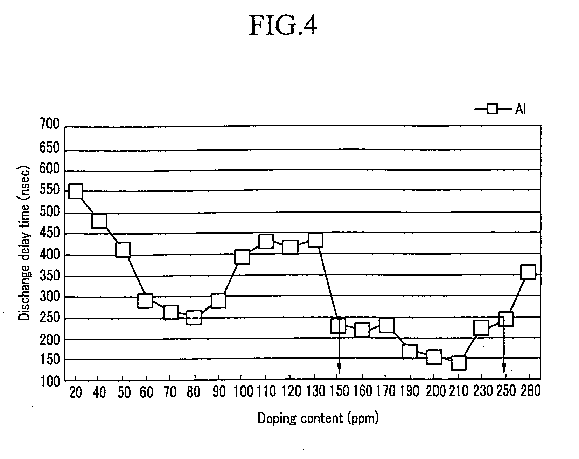

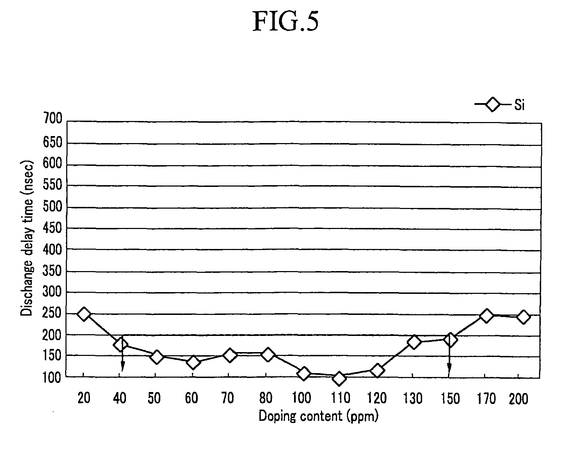

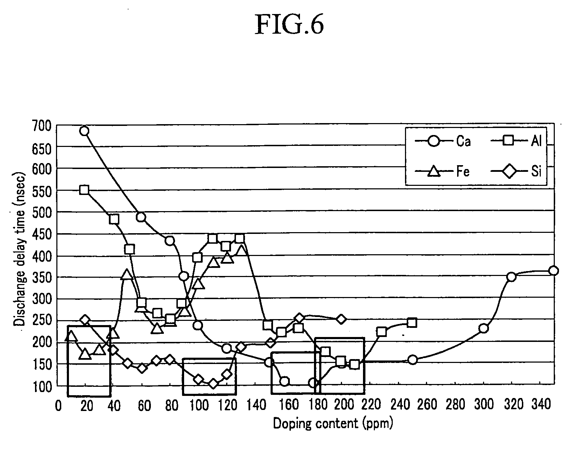

The discharge delay time (Ts: statistical delay time) of the plasma display panels, which were manufactured according to the process of Experimental Examples 1 to 60, were measured at room temperature. The measurement results are shown in Table 2, Table 3, and in FIGS. 2 to 5. The discharge delay time as a function of content of Ca, Fe, Al, and Si are shown in FIGS. 2 to 5, respectively. The overall results shown in FIGS. 2 to 5 are summarized in FIG. 6.

**Table 2**

| | Ca doping content | Discharge delay time (nsec) | | Fe doping content | Discharge delay time (nsec) |
|---|---|---|---|---|---|
| Experimental Example 1 | 20 | 683 | Experimental Example 15 | 10 | 215 |
| Experimental Example 2 | 60 | 487 | Experimental Example 16 | 20 | 173 |
| Experimental Example 3 | 80 | 433 | Experimental Example 17 | 30 | 185 |
| Experimental Example 4 | 90 | 352 | Experimental Example 18 | 40 | 223 |
| Experimental Example 5 | 100 | 238 | Experimental Example 19 | 50 | 359 |
| Experimental Example 6 | 120 | 187 | Experimental Example 20 | 60 | 283 |
| Experimental Example 7 | 150 | 152 | Experimental Example 21 | 70 | 235 |
| Experimental Example 8 | 160 | 108 | Experimental Example 22 | 80 | 249 |
| Experimental Example 9 | 180 | 103 | Experimental Example 23 | 90 | 271 |
| Experimental Example 10 | 200 | 149 | Experimental Example 24 | 100 | 334 |
| Experimental Example 11 | 250 | 158 | Experimental Example 25 | 110 | 387 |
| Experimental Example 12 | 300 | 226 | Experimental Example 26 | 120 | 395 |
| Experimental Example 13 | 320 | 347 | Experimental Example 27 | 130 | 411 |
| Experimental Example 14 | 350 | 361 | | | |

**Table 3**

| | Al doping content | Discharge delay time (nsec) | | Si doping content | Discharge delay time (nsec) |
|---|---|---|---|---|---|
| Experimental Example 28 | 20 | 552 | Experimental Example 48 | 20 | 253 |
| Experimental Example 29 | 40 | 481 | Experimental Example 49 | 40 | 182 |
| Experimental Example 30 | 50 | 415 | Experimental Example 50 | 50 | 153 |
| Experimental Example 31 | 60 | 294 | Experimental Example 51 | 60 | 142 |
| Experimental Example 32 | 70 | 265 | Experimental Example 52 | 70 | 159 |
| Experimental Example 33 | 80 | 251 | Experimental Example 53 | 80 | 162 |
| Experimental Example 34 | 90 | 294 | Experimental Example 54 | 100 | 115 |
| Experimental Example 35 | 100 | 395 | Experimental Example 55 | 110 | 103 |
| Experimental Example 36 | 110 | 432 | Experimental Example 56 | 120 | 125 |
| Experimental Example 37 | 120 | 419 | Experimental Example 57 | 130 | 188 |
| Experimental Example 38 | 130 | 435 | Experimental Example 58 | 150 | 197 |
| Experimental Example 39 | 150 | 229 | Experimental Example 59 | 170 | 253 |
| Experimental Example 40 | 160 | 218 | Experimental Example 60 | 200 | 249 |
| Experimental Example 41 | 170 | 231 | | | |
| Experimental Example 42 | 190 | 168 | | | |
| Experimental Example 43 | 200 | 153 | | | |
| Experimental Example 44 | 210 | 142 | | | |
| Experimental Example 45 | 230 | 225 | | | |
| Experimental Example 46 | 250 | 245 | | | |
| Experimental Example 47 | 280 | 358 | | | |

In FIGS. 2 to 5, the horizontal dotted line indicates an upper limit level at which the black noise is not shown. From the results shown in Tables 2 and 3, and in FIG. 2 to FIG. 6, it is understood that the preferable range of the amounts of Ca, Fe, Al, and Si are from 100 ppm to 300 ppm, from 10 ppm to 40 ppm, from 150 ppm to 250 ppm, and from 40 ppm to 150 ppm, respectively.

### Second Examples 1 to 4 and Second Comparative Examples 1 to 2

The same process as described referring to in Experimental Examples 1 to 14 was performed with the protective layer including MgO powder, Ca, Al, Si, and Fe. The amounts of Ca, Al, Si, and Fe used in these examples were summarized in the following Table 4.

**Table 4**

| | Ca doping content | Al doping content | Si doping content | Fe doping content |
|---|---|---|---|---|
| Second Comparative Example 1 | 90 | 130 | 20 | 5 |
| Second Example 1 | 150 | 170 | 80 | 10 |
| Second Example 2 | 160 | 190 | 100 | 20 |
| Second Example 3 | 180 | 210 | 120 | 30 |
| Second Example 4 | 200 | 230 | 130 | 40 |
| Second Comparative Example 2 | 320 | 280 | 170 | 50 |

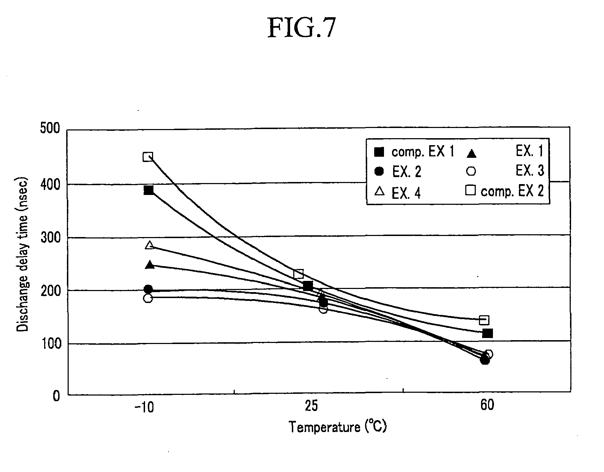

The discharge delay time of the plasma display panels provided from the Second Examples 1 to 4 and Second Comparative Examples 1 and 2 were measured at temperature of -10 °C, 25 °C, and 60 °C, and the measurement results are shown in the following Table 5 and in FIG. 7.

**Table 5**

| | Second Comparative Example 1 | Second Example 1 | Second Example 2 | Second Example 3 | Second Example 4 | Second Comparative Example 2 |
|---|---|---|---|---|---|---|
| -10°C | 391 | 251 | 192 | 187 | 285 | 453 |
| 25°C | 196 | 185 | 178 | 161 | 194 | 214 |
| 60°C | 116 | 65 | 67 | 72 | 138 | 134 |

As shown in Table 5 and FIG. 7, the plasma display panels of the Second Examples 1 to 4 have a much shorter discharge delay time than those of the Second Comparative Examples 1 and 2.

As described above, the plasma display panel according to one embodiment includes a protective layer that includes a MgO sintered material and dopants. The dopants include a specific amount of a first dopant element including Ca, Al, and Si, and a second dopant element such as Fe, Zr, or combinations thereof. By the synergistic effects of the dopants, the address discharge delay time can be minimized during display discharge, which results in improvement of discharge stability and display quality.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A plasma display panel (PDP) comprising:
a dielectric layer; and
a protective layer formed on the dielectric layer; the protective layer including magnesium oxide (MgO), first dopants, and a second dopant; the first dopants including calcium (Ca), aluminum (Al), and silicon (Si); the second dopant being selected from the group consisting of iron (Fe), zirconium (Zr), and combinations thereof, and
the Ca content is 100 to 300ppm by mass based on MgO content.

2. A plasma display panel according to claim 1, wherein the content of the calcium is about 160 ppm by mass to about 180 ppm by mass based on the mass of the magnesium oxide.

3. A plasma display panel according to claim 1 or 2, wherein the content of the silicon included in the protective layer is about 40 ppm by mass to about 150 ppm by mass based on the mass of the magnesium oxide.

4. A plasma display panel according to claim 3, wherein the content of the silicon is about 100 ppm by mass to about 120 ppm by mass based on the mass of the magnesium oxide.

5. A plasma display panel according to any one of claims 1 to 4, wherein the second dopant includes iron, and content of the aluminum included in the protective layer is about 150 ppm by mass to about 250 ppm by mass based on the mass of the magnesium oxide.

6. A plasma display panel according to claim 5, wherein the content of the aluminum is about 190 ppm by mass to about 210 ppm by mass based on the mass of the magnesium oxide.

7. A plasma display panel according to any one of claims 1 to 6, wherein the second dopant includes iron, and the content of the iron included in the protective layer is about 10 ppm by mass to about 40 ppm by mass based on the mass of the magnesium oxide.

8. A plasma display panel according to claim 7, wherein the content of the iron is about 20 ppm by mass to about 30 ppm by mass based on the mass of the magnesium oxide.

9. A plasma display panel according to any of one claims 1 to 4, wherein the second dopant includes zirconium, and the content of the aluminum included in the protective layer is about 150 ppm by mass to about 170 ppm by mass based on the mass of the magnesium oxide.

10. A plasma display panel according to any of one claims 1 to 4 or 9, wherein the second dopant includes zirconium, and content of the zirconium included in the protective layer is about 40 ppm by mass to about 100 ppm by mass based on the mass of the magnesium oxide.

11. A plasma display panel according to claim 10, wherein the content of the zirconium is about 50 ppm by mass to about 80 ppm by mass based on the mass of the magnesium oxide.

12. A plasma display panel according to any of one claims 1 to 11, wherein the magnesium oxide is polycrystalline and produced by a sintering method.

13. A plasma display panel (PDP) comprising:
a dielectric layer formed on the inner surface of the second substrate and covering the display electrode; and
a protective layer formed on the dielectric layer; the protective layer including magnesium oxide (MgO), calcium (Ca), aluminum (Al), silicon (Si), and zirconium (Zr).

14. A plasma display panel according to claim 13, wherein content of the calcium included in the protective layer is about 100 ppm by mass to about 300 ppm by mass based on the mass of the magnesium oxide.

15. A plasma display panel according to claim 14, wherein the content of the calcium is about 160 ppm by mass to about 180 ppm by mass based on the mass of the magnesium oxide.

16. A plasma display panel according to any one of claims 13 to 15, wherein the content of the silicon included in the protective layer is about 40 ppm by mass to about 150 ppm by mass based on the mass of the magnesium oxide.

17. A plasma display panel according to claim 16, wherein the content of the silicon is about 100 ppm by mass to about 120 ppm by mass based on the mass of the magnesium oxide.

18. A plasma display panel according to any one of claims 13 to 17, wherein the content of the aluminum included in the protective layer is about 150 ppm by mass to about 250 ppm by mass based on the mass of the magnesium oxide.

19. A plasma display panel according to claim 18, wherein the content of the aluminum is about 150 ppm by mass to about 170 ppm by mass based on the mass of the magnesium oxide.

20. A plasma display panel according to any one of claims 13 to 19, wherein the content of the zirconium included in the protective layer is about 40 ppm by mass to about 100 ppm by mass based on the mass of the magnesium oxide.

21. A plasma display panel according to claim 20, wherein the content of the zirconium is about 50 ppm by mass to about 80 ppm by mass based on the mass of the magnesium oxide.
